(19) Europäisches Patentamt
European Patent Office
Office européen des brevets

(11) EP 3 447 469 B1

## (12) EUROPÄISCHE PATENTSCHRIFT

(45) Veröffentlichungstag und Bekanntmachung des Hinweises auf die Patenterteilung:
08.07.2020 Patentblatt 2020/28

(51) Int Cl.:
*G01M 13/04* (2019.01)

(21) Anmeldenummer: 18189758.8

(22) Anmeldetag: 20.08.2018

## (54) VERFAHREN UND VORRICHTUNG ZUR ÜBERWACHUNG EINES GLEITLAGERS

METHOD AND DEVICE FOR MONITORING A SLIDE BEARING

PROCÉDÉ ET DISPOSITIF DE SURVEILLANCE D'UN PALIER LISSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2017 DE 102017119543**

(43) Veröffentlichungstag der Anmeldung:
**27.02.2019 Patentblatt 2019/09**

(73) Patentinhaber: **Rolls-Royce Deutschland Ltd & Co KG**
**15827 Blankenfelde-Mahlow (DE)**

(72) Erfinder:
• **NOWOISKY, Sebastian**
**15827 Blankenfelde-Mahlow (DE)**
• **MOKHTARI MOLK ABADI, Noushin**
**15827 Blankenfelde-Mahlow (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
WO-A1-2013/156068     US-A1- 2003 106 375
US-A1- 2015 088 435     US-B1- 6 298 725

**Beschreibung**

Die Erfindung betrifft ein Verfahren zur Überwachung eines Gleitlagers mit den Merkmalen des Anspruchs 1 und eine Vorrichtung zur Überwachung eines Gleitlagers mit den Merkmalen des Anspruchs 10.

Gleitlager sind ein vielzeitig einsetzbares Maschineelement, bei dem die Relativbewegung zwischen einer Welle und der Lagerschale des Gleitlagers bzw. einem Zwischenmedium eine Gleitbewegung ist.

Ein Einsatzgebiet für Gleitlager ist z.B. die Lagerung von Planetenrädern in Planetengetrieben, die in Turbofan-Flugzeugtriebwerken eingesetzt werden oder werden sollen.

In der Patentanmeldung US 2003/0106375 A1 wird ein Verfahren zum Identifizieren von Defekten in Rotations- und Wälzlagern beschrieben. Weitere Verfahren zum Identifizieren von Defekten in Lagern werden in den US6298725B1, WO2013156068A1 und EP0209862A2 beschrieben. Die Anforderungen an neue Triebwerke hinsichtlich Treibstoffverbrauch, $CO_2$-Ausstoß und

Schallemission erhöhen sich kontinuierlich, so dass die Triebwerkskomponenten stetig weiterentwickelt werden müssen. In zukünftigen Mantelstromtriebwerken sollen zu diesem Zweck der Verdichter und die Turbine durch den Einsatz eines Hochleistungsplanetengetriebes vom Fan entkoppelt werden. Dadurch können ·diese Komponenten in ihren jeweiligen optimalen Betriebspunkten betrieben werden. Die so mögliche geringere Drehzahl des Fans erlaubt eine Erhöhung des Fandurchmessers, was zu einem höheren Bypass-Massenstrom führt, ohne dabei Überschall an den Fanspitzen zu erzeugen.

In den Hochleistungsgetrieben werden Planetengetriebe eingesetzt, deren Bauteile, wie z.B. Zahnräder, Wellen und Lager, potentielle Verschleißteile darstellen. Ein Ausfall dieser Bauteile kann gravierende Auswirkungen auf das gesamte Flugzeugtriebwerk haben. Dabei spielen Mischreibungsereignisse in Gleitlagern eine große Rolle, da sie anzeigen, dass sich die Schmierung aus dem gewünschten Flüssigkeitsreibungsbereich entfernt hat.

Aus diesem Grund ist werden Verfahren und Vorrichtungen benötigt, um den Betrieb von Gleitlagern zu überwachen.

Dieser Aspekt wird durch ein Verfahren mit den Merkmalen des Anspruchs 1 adressiert.

Dabei wird ein Gleitlager mit einer darin gelagerten, insbesondere darin drehenden Welle auf mindestens ein Mischreibungsereignis überwacht. Die Überwachung des mindestens einen Mischreibungsereignisses kann bei drehenden das Gleitlager und ruhender Welle oder drehender Welle und ruhendem Gleitlager erfolgen.

Es wird mindestens ein zeitabhängiges Körperschallsignal des mindestens einen Körperschallsensors, insbesondere genau eines Körperschallsensors aufgenommen. Das Verfahren ist gerade auch mit nur einem Körperschallsensor durchführbar, so dass eine besonders wirtschaftliche Sensorik möglich ist.

Zunächst erfolgt eine Filterung des zeitabhängigen Körperschallsignals, um insbesondere andere mechanische Vibrationen zu unterdrücken. Das Körperschallsignal weist im Falle von Mischreibungsereignissen eine Amplitudenmodulation auf.

Anschließend erfolgt die Berechnung einer Hüllkurve für das gefilterte Körperschallsignal, wobei im Falle von Mischreibungsereignissen die Hüllkurven das amplitudenmodulierte Signal einhüllen.

Die Hüllkurve weist in der Regel noch scharfe Konturen, wie z.B. Zacken auf, so dass die Bestimmung der Maxima in der Hüllkurve, die die Mischreibungsereignisse anzeigen schwierig ist. Daher wird die Hüllkurve einer Glättung unterzogen.

Die Daten der geglätteten Hüllkurve werden mit einem Drehwinkelsignal, das von der Umdrehung der Welle im Gleitlager abhängig ist, kombiniert. Die Kombination wird auch als Fusionierung der Daten bezeichnet.

Damit kann die Periodizität der Maxima erkannt werden. Die Maxima, die die Mischreibungsereignisse anzeigen, treten in jeder Umdrehung der Welle in ähnlicher Form auf.

Es erfolgt dann eine Berechnung der Maxima aus den kombinierten Daten aus dem vorhergehenden Schritt für die Bestimmung einer Winkelangabe für die Mischreibungsereignisse am Umfang des Gleitlagers. Im Fall, dass nur ein Mischreibungsereignis vorliegt, wird nur ein Maximum bestimmt.

Damit können Mischreibungsereignisse in einfacher und robuster Weise räumlich bestimmten Stellen im Gleitlager zugeordnet werden. Dies kann z.B. ein zeitbasierte Wartung um eine zustandsbasierten Wartung ergänzen, um eine erhöhte Sicherheit für Mensch, Maschine und Umwelt bieten zu können, die Maschinenlaufzeit zu verlängern und Wartungsarbeiten besser planen zu können.

Dabei kann in einer Ausführungsform das Drehwinkelsignal durch eine Mustererkennung oder einen Referenzimpuls durch einen Inkrementalgeber, insbesondere einen magnetischen Referenzimpuls bestimmt und / oder erzeugt werden.

Das Drehwinkelsignal kann auf unterschiedliche Weise erzeugt werden. In einer Ausführungsvariante wird das Drehwinkelsignal allein durch die Bewegung der Welle und / oder des Gleitlagers, insbesondere durch mindestens ein Magnetelement der Welle und / oder im Gleitlager und einem entsprechend zugeordneten Magnetsensor (z.B. eine Spule) generiert. Dies ist eine passive Generierung des Drehwinkelsignals allein durch die Relativbewegung von Welle und Gleitlager.

Zusätzlich oder alternativ kann das Drehwinkelsignal aktiv durch mindestens einen Impuls generiert werden, insbesondere einen Nullimpuls oder eine Vielzahl von Impulsen des Inkrementalgebers. Grundsätzlich ist ein Impuls, z.B. der Nullimpuls ausreichend. Wenn mehr Impulse verwendet werden, kann die Genauigkeit gesteigert werden.

Die Filterung des Körperschallsignals kann in einer Ausführungsform mit einem Hochpassfilter erfolgen, insbesondere mit einer cut-off Frequenz zwischen 50 und 300 kHz, insbesondere zwischen 80 und 150 kHz. Die Frequenzen von Mischreibungsereignissen unterscheiden sich von anderen mechanischen Vibrationen in einem Gleitlager, so dass die Mischreibungsereignisse gut aus dem gesamten Schwingungsspektrum herausfilterbar sind.

Ferner kann die Berechnung der Hüllkurve mittels einer Hilbert Transformation oder über eine Mittelung über eine vorbestimmte Menge an gefilterten Körperschalldatenpunkten erfolgen

Die Hüllkurve kann in einer Ausführungsform durch einen Glättungsfilter, insbesondere durch einen Savitzky-Golay Filter geglättet werden.

In einer Ausführungsform erfasst und speichert ein Rechner die zeitabhängigen Daten über die Winkelangabe, den Winkelort, die Intensität und / oder die Dauer des mindestens einen Mischreibungsereignisses am Umfang des Gleitlagers und gibt bei dem Eintreten einer vorbestimmten Bedingung ein Signal ab, insbesondere ein Warnsignal oder ein Reparatursignal. Der Rechner kann z.B. erkennen, wenn eine bestimmte Anzahl Mischreibungsereignisse pro Umdrehung und / oder eine bestimmte räumliche Konzentration der Mischreibungsereignisse eingesetzt hat. Je nach dem betrachteten System, in das das Gleitlager integriert ist, können Bedingungen formuliert werden, die als akzeptabel oder eben nicht mehr akzeptabel betrachtet werden. Im letzteren Fall kann dann z.B. ein Signal abgegeben werden, dass ein mögliches Versagen des Gleitlagers anzeigt.

In einer Ausführungsform des Verfahrens ist das Gleitlager in einem Planetengetriebe angeordnet, insbesondere in einem Planetengetriebe in einem Fahrzeug, einer Windkraftanlage oder einem Flugzeugtriebwerk angeordnet. Planetengetriebe müssen in der Regel über längere Zeiträume wartungsfrei arbeiten, so dass eine Überwachung, insbesondere für eine mögliche Schadensvorhersage sinnvoll ist.

Auch können kinematische Bewegungsdaten und / oder Körperschallereignisse des Planetengetriebes, insbesondere die Bewegungsdaten und / oder Körperschallereignisse der Bewegungen von Sonnenrad, Planetenhalter und / oder Planetenrädern herausgefiltert werden. Die Frequenzbereiche dieser Ereignisse liegen häufig unterhalb des Frequenzbereiches, in dem Mischreibungsereignisse auftreten.

Die Aufgabe wird auch durch eine Vorrichtung zur Überwachung eines Gleitlagers mit den Merkmalen des Anspruchs 11 gelöst.

Dabei dient ein Mittel der Filterung des Körperschallsignals zur Abtrennung von Schallereignissen, die sich von Mischreibungsereignissen unterscheiden.

Die Vorrichtung weist ferner ein Mittel für eine Berechnung einer Hüllkurve für das gefilterte Körperschallsignal und ein Mittel für eine Glättung der Hüllkurve auf.

Ferner weist die Vorrichtung ein Mittel für eine Kombination der Daten der geglätteten Hüllkurve mit einem Drehwinkelsignal, das von der Umdrehung der Welle im Gleitlager abhängig ist, auf.

Ein Mittel dient der Berechnung mindestens eines Maximums aus den kombinierten Daten für die Bestimmung einer Winkelangabe für das mindestens eine Mischreibungsereignis am Umfang des Gleitlagers.

Mit einer solchen Vorrichtung, die z.B. in Form eines Mikroprozessors ausgebildet sein kann, ist eine effiziente Überwachung eines Gleitlagers auf Mischreibungsereignisse möglich.

Dabei kann in einer Ausführungsform der mindestens eine Körperschallsensor an der Stirnseite einer Halterung des Gleitlagers angeordnet sein.

In einer möglichen Bauform des mindestens einen Körperschallsensors wird ein Piezoelement zur Aufnahme des Körperschalls verwendet.

Für eine effiziente Erfassung des Körperschalls bei Mischreibungsereignissen kann der mindestens eine Körperschallsensor in unmittelbarer Nähe des Umfangs des Gleitlagers angeordnet sein, insbesondere in unmittelbarer Nähe einer Krafteinleitung.

In Zusammenhang mit den in den Figuren dargestellten Ausführungsbeispielen wird die Erfindung erläutert. Dabei zeigt

Fig. 1        ein schematisches Körperschallsignal bei Mischreibung zwischen einer Welle und einem Gleitlager mit einer Amplitudenmodulation;

Fig. 2        eine schematische Darstellung einer Ausführungsform zur Überwachung eines Gleitlager mit einer Ermittlung der Winkelauflösung des Körperschallsignals;

Fig. 3A       eine Vorderansicht einer Ausführungsform einer Gleitlagervorrichtung;

Fig. 3B       eine perspektivische Darstellung der Gleitlagervorrichtung nach Fig. 3A;

Fig. 3C       eine weitere perspektivische Darstellung der Gleitlagervorrichtung nach Fig. 3B;

Fig. 4        eine schematische Darstellung eine Versuchsaufbaus für die Überwachung des Gleitlagers;

Fig. 5        ein Körperschallsignal und ein Z-Signal eines Inkrementalgebers für eine Gleitlagerung mit einer Drehzahl von 340 U / min bei Flüssigkeitsreibung;

Fig. 6        ein Körperschallsignal gemessen über zwei Umdrehungen einer Welle in einem Gleitlager mit vier Mischreibungsereignissen (Anstreifungen) pro Umdrehung;

Fig. 7    das Körperschallsignal nach Fig. 6 für eine Umdrehung mit Angabe der Winkel der Mischreibungsereignisse (Anstreifungen);

Fig. 8    eine Darstellung der Energie der Einhüllenden des Körperschallsignals und Z-Signals ohne Glättung;

Fig. 9    eine Darstellung der Energie der Einhüllenden des Körperschallsignals und Z-Signals mit Glättung;

Fig. 10   eine Ausführungsform der Überwachung eines Gleitlagers auf Mischreibungsereignisse in einem Planetengetriebe;

Fig. 11   eine weitere Ausführungsform der Überwachung eines Gleitlagers auf Mischreibungsereignisse in einem Planetengetriebe.

Im Folgenden wird die Überwachung von hydrodynamischen Gleitlagern auf Mischreibungsereignisse anhand mehrerer Ausführungsbeispiele beschrieben.

Ein hydrodynamisches Gleitlager 1 besitzt theoretisch eine unendliche Lebensdauer, solange die Welle 6 und der Belag des Gleitlagers 1 durch einen tragenden Schmierfilm voneinander getrennt sind. Sobald diese beiden Bauteile in Berührung kommen, entsteht mechanische Reibung (Mischreibung), was letztlich zu einem Schaden führt. Das Gleitlager 1 kann dadurch seine Funktionsfähigkeit verlieren, da bei erhöhtem Abrieb oder einem Schaden kein tragender Schmierfilm mehr gebildet werden kann.

Eine bekannte Methode zur Überwachung hydrodynamischer Gleitlager 1 verwendet Wellenumlaufbahnplots (sogenannte Shaft Orbit-Plots, siehe J. Deckers, "Entwicklung einer Low-Cost Körperschallsensorik zur Überwachung des Verschleißverhaltens von wälz- oder gleitgelagerten Kreiselpumpen kleiner Leistung", Dissertation, Gerhard Mercator-Universität Duisburg, Duisburg, 2001)

Dabei wird durch zwei orthogonal am Gleitlager 1 angebrachte Positionssensoren die Wellenumlaufbahn innerhalb des Gleitlagers erfasst. Die dabei erfassten zwei phasenverschobenen Positionssignale werden in Polarkoordinatendarstellung in sogenannten Orbit-Plots dargestellt. Diese Plots stellen die drehwinkelabhängige Bewegung der gelagerten Welle 6 quer zur axialen Wellenachse dar.

Zur Erfassung der Phasenlage wird ein sogenannter Keyphasor (Referenzgeber) verwendet.

Tritt die Welle 6 nun aus der zulässigen Umlaufbahn heraus, so hat eine Anstreifung (d.h. ein Mischreibungsereignis) zwischen Welle 6 und dem Belag des Gleitlagers 1 stattgefunden. Dies ist im Wellenumlaufplot erkennbar.

Mit dieser Methode kann nicht nur ein Anstreifvorgang identifiziert werden, sondern auch die Intensität und die Position der Berührung in Umfangsrichtung des Gleitlagerbelags ermittelt werden.

Die gegenseitige Berührung von Rauhigkeitsspitzen der beiden Gleitpartner bei einem Mischreibungsereignis (Anstreifvorgang) verursacht im Gleitlager 1 Körperschall mit einer Frequenz von bis zu 2 MHz. Die Verwendung einer Körperschallanalyse bietet gegenüber anderen Diagnoseverfahren Vorteile hinsichtlich der Früherkennung von Lagerschäden am Gleitlager 1 (siehe M. Fritz, A. Burger und A. Albers, "Schadensfrüherkennung an geschmierten Gleitkontakten mittels Schallemissionsanalyse," Institut für Maschinenkonstruktionslehre und Kraftfahrzeugbau, Bericht, Universität Karlsruhe, 2001; P. Raharjo, "An Investigation of Surface Vibration, Airborne Sound and Acoustic Emission Characteristics of a Journal Bearing for Early Fault Detection and Diagnosis," Dissertation, University of Huddersfield, Mai 2013)

Durch geeignete Signalverarbeitungs- und Merkmalsextraktionsalgorithmen kann die nicht lebensdauerbeeinflussende Flüssigkeitsreibung von der lebensdauermindernden Misch- und Festkörperreibung unterschieden werden. Die zur Diagnose eingesetzten Algorithmen mittels Körperschall bewerten den Reibungszustand jedoch nur global und nicht lokal über den Umfang des Gleitlagers 1, d.h. es fehlt an einer winkelaufgelösten Feststellung der Mischreibungsereignisse a, b, c, d.

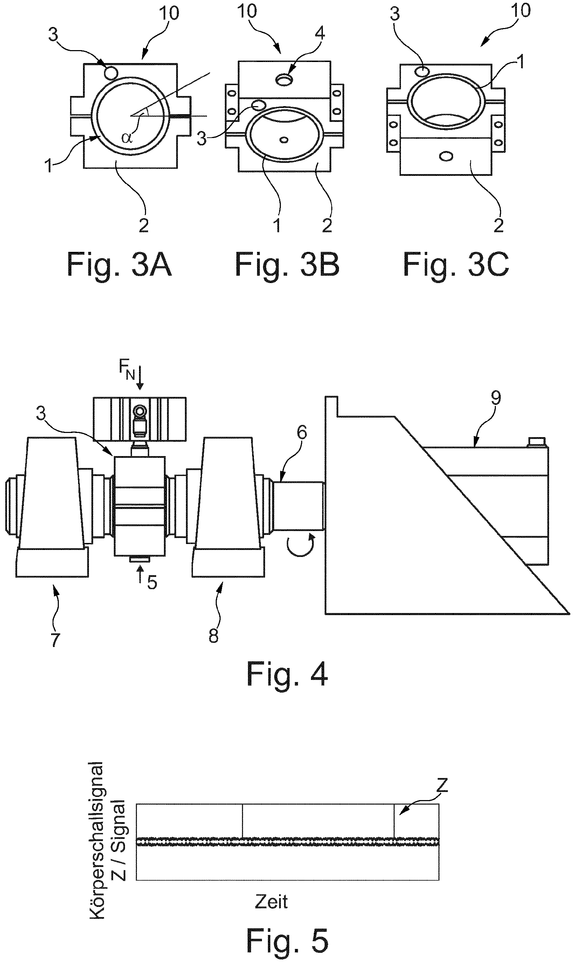

Für die Lebensdauerprognose von Gleitlagern 1 ist aber die Kenntnis über lokale Mischreibungsvorgänge a, b, c, d essentiell. Eine wiederholte Reibung an z.B. an der Position $\alpha=20°$ (z.B. in Fig. 3A eingezeichnet) verringert die Lebensdauer des Gleitlagers 1 stärker als über den Umfang verteilte Reibungsvorgänge gleicher Anzahl.

Ein Phänomen, welches bei der Überlagerung eines hochfrequenten Trägersignals und eines niederfrequenten Nutzsignals auftritt, ist die Amplitudenmodulation.

Bei einer lokalen Berührung der Welle 6 und dem Belag des Gleitlagers 1 kommt es ebenfalls zu einer Amplitudenmodulation des Körperschallsignals (siehe M. Leahy, D. Mba, P. Cooper, A. Montgomery und D. Owen, "Experimental investigation into the capabilities of acoustic emission for the detection of shaft-to-seal rubbing in !arge power generation turbines," Proceedings of the Institution of Mechanical Engineers, Part J: Journal of Engineering Tribology, Bd. 220, Nr. 7, p. 607-615, 2006; A. Albers und M. Dickerhof, "Simultaneous Monitoring of Rolling-Element and Journal Bearings Using Analysis of Structure-Born Ultrasound Acoustic Emissions," in International Mechanical Engineering Congress & Exposition, Vancouver, British Columbia, Canada, 2010.)

Die Mischreibungsereignisse a, b, c, d treten in Abhängigkeit von der Drehzahl der Welle 6 auf. Die Mischreibungsereignisse a, b, c, d selbst erzeugen jeweils ein Körperschallsignal, das deutlich höherfrequent ist, als die Drehfrequenz der Welle 6. In der Summe wird ein Körperschallsignal S aufgenommen, bei sich eine niederfrequente Drehfrequenz und ein höherfrequentes Körperschallsignal überlagern.

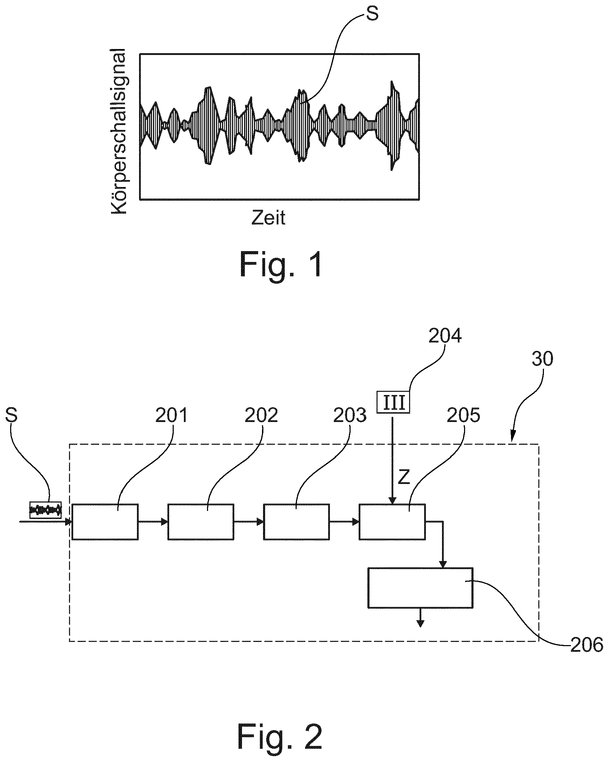

Der schematischen Signalverlauf des Körperschallsignals S ist in Fig. 1 erkennbar. Die entstehenden Modulationen unterscheiden sich in der Amplitude und Dauer.

Bei reiner Flüssigkeitsreibung, bei der keine Anstreifvorgänge zwischen Welle 6 und dem Belag des Gleitlagers 1 stattfinden, treten keine Amplitudenmodulationen auf.

Wie oben erwähnt, stellt die genaue Umfangsposition (d.h. der Winkel a), bei der die Mischreibungsereignisse a, b, c, d auftreten, eine für die Lebensdauerprognose eine wichtige Information dar. Die Akkumulation von Mischreibungsereignissen a, b, c, d an einer Umfangsposition kann somit als Maß für den Verschleiß des Gleitlagerbelags interpretiert werden.

Bei einer entsprechenden Überwachung sollen die Komplexität der Messkette als auch die Kosten für die Herstellung eines Produkts (hier das Diagnose- bzw. Prognosesystem) so gering wie möglich gehalten werden. Eine Reduzierung der Sensorzahlen, idealerweise die Verwendung nur eines Sensors, vereinfacht die Messkette und erlaubt auch eine deutliche Kostenreduzierung.

Im Folgenden werden Ausführungsformen zur Überwachung von Gleitlagern 1 beschrieben, die verschiedene Eigenschaften des erfassten Körperschallsignals S verwenden, um Mischreibungsereignisse a, b, c, d zu detektieren.

Eine Hüllkurve, auch Einhüllende genannt, hüllt eine Kurvenschar (z.B. die eines Köperschallsignals S gemäß Fig. 1) ein. So entsteht eine neue Kurve, mit der es möglich ist, eine Aussage über lokale Maxima und Minima des auf das hochfrequente Signal modulierten niederfrequenten Signals zu treffen. Eine Hüllkurve kann z.B. mit einer Hilbert Transformation bestimmt werden (siehe D. Guicking, Schwingungen: Theorie und Anwendung in Mechanik, Akustik, Elektrik und Optik, Göttingen: Springer Vieweg: Springer Fachmedien Wiesbaden, 2016.).

Für die hier vorgestellte Anwendung ist es jedoch vollkommen ausreichend das Verhalten der Amplituden für die Bestimmung der Einhüllende zu kennen. Es muss lediglich erkannt werden, wo lokale Maxima und Minima auftreten. Die Hüllkurve wird dadurch ermittelt, in dem das RMS (root mean square, quadratisches Mittel) über eine vorbestimmte Menge an Datenpunkten bestimmt wird. Damit liegt auch ein Maß für die Energie des Körperschallsignals vor, wobei jeweils die Scheitelwerte und die Kurvenform berücksichtigt werden.

Die aus einer Einhüllenden entstandene Kurve ist mit Krümmungen und / oder scharfen Kanten versehen, welche für eine Aussage über lokale Maxima und Minima geglättet werden sollten. Dazu können z.B. Näherungspolynome niedriger Ordnung verwendet werden, um eine möglichst gute Glättung zu realisieren. Eine Möglichkeit der Glättung ist die Verwendung des Savitzky-Golay-Filters (siehe A. Savitzky und M. J. E. Golay, "Smoothing and Differentiation of Data by Simplified Least Squares Procedures," Anal. Chem., July 1964).

Dieses Verfahren glättet ein Signal durch stückweise Anpassung einer Polynomfunktion an das Signal. Diese Anpassung geschieht durch die Methode der kleinsten Quadrate zwischen der Matrix X und dem Vektor y:

$$ y = X\,b $$

Die Lösung für b mit Hilfe der kleinsten Quadrate ist

$$ b = (X^T X)^{-1}\, X^T y. $$

Die für die Glättung zur Anwendung kommenden geschätzten Werte $\hat{Y}$, sind:

$$ \hat{Y} = Xb = X(X^T X)^{-1}\, X^T y = Hy $$

Nachfolgend werden zunächst Ausführungsformen für das Verfahren zur Mischreibungslokalisation über den Umfang des Gleitlagerbelags mittels Körperschallmessung genauer erläutert.

In Fig. 2 sind Ausführungsschritte einer Ausführungsform des Verfahrens zur Überwachung eines Gleitlagers dargestellt.

Das amplitudenmodulierte Körperschallsignal S wird in einem ersten Schritt 201 hochpassgefiltert, um Störsignale aus der Umgebung und Signale, die nichts mit den Mischreibungsereignissen a, b, c, d zu tun haben, weitestgehend zu dämpfen. Im vorliegenden Fall wird eine cut-off Frequenz von 100 kHz verwendet. In anderen Ausführungsformen können auch andere cut-off Frequenzen verwendet werden. Generell sind cut-off Frequenzen im Bereich 50 bis 300 kHz sinnvoll, da die Mischreibungsereignisse zum größten Teil oberhalb dieser cut-off Frequenzen liegen.

Im nachfolgenden Schritt 202 wird die Einhüllende des Körperschallsignals S z.B. mittels Hilbert Transformation gebildet. Das hier verwendete Verfahren bildet über eine bestimmte Anzahl B von Signalpunkten $n_i$ (z.B. 800) den Mittelwert und speichert diesen Wert in einem Vektor.

Wie oben erläutert, kann bei einer Verwendung des RMS die Energie der Einhüllenden bestimmt werden, die jedoch mit scharfen Krümmungen oder Zacken versehen ist. Um die lokalen Maxima und Minima numerisch eindeutiger ermitteln zu können, kann z.B. ein Savitzky-Golay-Filter 3. Ordnung zur Glättung des Körperschallsignals S verwendet werden (Schritt 203). In anderen Ausführungsformen können auch andere Filter verwendet werden.

In der dargestellten Ausführungsform wird ein Inkrementalgeber dazu verwendet, Impulse auf das Gleitlager 1 abzugeben (Schritt 204). Diese Impulse sind Drehwinkelsignale, die von der Umdrehung der Welle 6 im Gleitlager 1 abhängig sind.

Das Nullimpulssignal (Z-Signal) des Inkrementalgebers wird in dieser Anwendung zur Identifikation der genauen Winkelposition der Mischreibungsereignisse a, b, c, d verwendet. Zwischen zwei Rechtecksignalen eines Inkrementalgebers findet genau eine Umdrehung der Welle 6 im Gleitlager 1 statt. Beide Signale, sowohl das Köperschallsignal S als auch das Z-Signal Z, werden zeitgleich aufgenommen (Schritt 205). Für eine verbesserte Genauigkeit können auch mehr als ein Impulssignal pro Umdrehung verwendet werden.

Bei der Überlagerung des verarbeiteten Körperschallsignals S und des Z-Signals Z (Schritt 205) kann eine genaue Zuordnung der Maxima - resultierend aus dem Körperschall der Mischreibungsereignisse - zu der Winkelposition gemacht werden (Schritt 206).

Die Bearbeitung und Auswertung der Signale kann mit einem Rechner 30 erfolgen. Die Signale des Körperschallsensors 3 können in üblicher Weise, ggf. über einen Verstärker zu dem Rechner 30 übertragen werden. In Fig. 2 ist dargestellt, dass der Rechner alle Schritte ausführt. Es ist auch möglich, dass der Rechner 30 dezentral arbeitet, so dass einzelne Schritte von Teilen des Rechners 30 von dezentralen Prozessoren durchgerührt werden.

Jedes Maximum repräsentiert dabei ein Anstreifen der Welle an den Gleitlagerbelag, d.h. ein Mischreibungsereignis a, b, c, d. Mit der Kenntnis des Signals über die gemessenen Winkelpositionen kann jedem Maximum ein Winkel zugeordnet werden, der die Anstreifstelle (d.h. das Mischreibungsereignis a, b, c, d) im Belag des Gleitlagers 1 kennzeichnet.

Im Folgenden werden Ergebnisse dargestellt, bei denen sowohl Mischreibung als auch - zum Vergleich - Flüssigkeitsreibung auftraten. Dazu wurde Ausführungsformen verwendet, die in Fig. 3A, B, C und Fig. 4 dargestellt sind.

Eine Gleitlagervorrichtung 10 ist in Fig. 3A in einer Vorderansicht, in den Fig. 3B und 3C jeweils in einer perspektivischen Ansicht dargestellt. Das eigentliche Gleitlager 1 (d.h. die Gleitlagerbuchse) ist dabei in einer Halterung 2 eingebettet, die auch den Körperschallsensor 3 aufweist. Im vorliegenden Fall bilden die Halterung 2, das Gleitlager 1 und der Körperschallsensor 3 eine Gleitlagervorrichtung 10. In anderen Ausführungsformen kann die Gleitlagervorrichtung 10 auch aus anderen Bauteilen, insbesondere auch aus mehr Bauteilen gebildet sein.

Bei der dargestellten Ausführungsform ist nur ein Körperschallsensor 3 erforderlich, der in der dargestellten Ausführungsform seitlich etwas aus der Mitte versetzt, in der Nähe des Umfangs des Gleitlagers 1 und an der Vorderseite der Gleitlagervorrichtung 10 angeordnet ist. Der im Betrieb des Gleitlagers 1 erzeugte Körperschall wird durch die Festkörper gut zum Körperschallsensor 3 übertragen. Dabei ist es sinnvoll, den Körperschallsensor 3 in der Nähe einer äußeren Krafteinleitung anzuordnen. Als Körperschallsensor 3 kann z.B. ein Physical Acoustics WD 100-900 kHz Breitband Sensor eingesetzt werden. Der Körperschallsensor 3 kann ein Piezoelement aufweisen.

In der dargestellten Ausführungsform erfolgt eine Krafteinleitung $F_N$ (d.h. eine Lagerlast) von oben (siehe Fig. 4) auf die Halterung 2 des Gleitlagers 1, die dafür eine Auflagebohrung 4 aufweist. Eine Ölversorgungszuleitung 5 befindet auf der gegenüberliegenden Seite der Halterung 2.

In Fig. 4 ist ferner dargestellt, dass eine Welle 6 - gelagert in zwei Stützlagern 7, 8 - durch das Gleitlager 1 geführt wird. Die Welle 6 wird durch einen Elektromotor 9 angetrieben.

Es wird erwartet, dass es im Betrieb des Gleitlagers 1 bei der Flüssigkeitsreibung zu keiner Modulation im erhaltenen Signal kommt, da kein Anstreifen der Welle 6 und des Belag des Gleitlagers 1 stattfindet. Bei Mischreibungsereignissen sollte eine Modulation im Signal zu erkennen sein.

Unter konstanter Last $F_N$ wurde eine absteigende Drehzahlrampe gefahren. Jede Drehzahl wurde für drei Sekunden gehalten. Damit ist es möglich, bei konstanter Last $F_N$ von der Flüssigkeitsreibung, welche in hohen Drehzahlen vorkommt, in den Bereich der Mischreibung zu fahren.

Beispielhaft sind in Fig. 5 für eine konstante Last $F_N$ von 1500 N und einer Drehzahl von 340 U / min das Körperschallsignal S und das Z-Signal Z des Inkrementalgebers dargestellt. In diesem Bereich findet Flüssigkeitsreibung statt; es sind keine Modulationen im Signal zu erkennen.

Das Z-Signal Z ist das Signal des Inkrementalgebers und wird einmal pro Umdrehung als Rechtecksignal ausgegeben. Zwischen zwei Rechtecksignalen findet genau eine Umdrehung der Welle 6 statt.

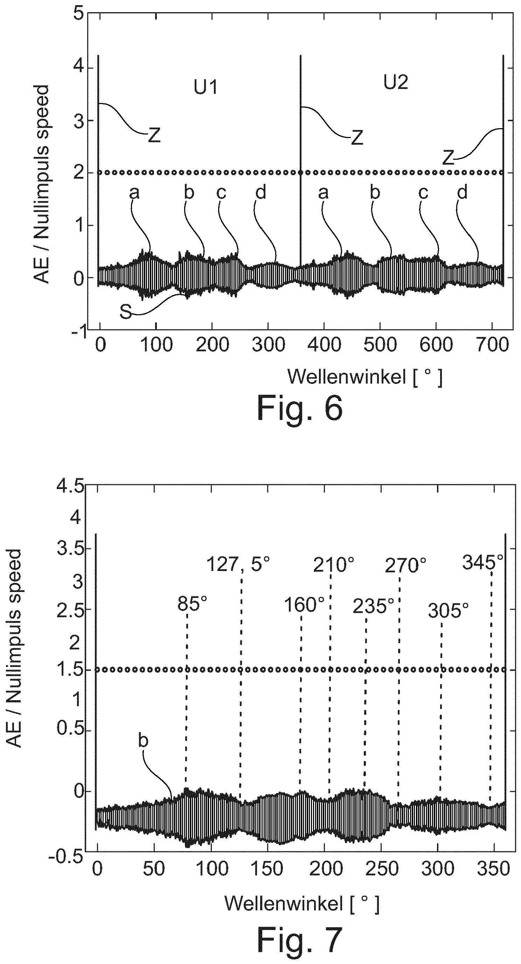

Die Fig. 6 zeigt das Körperschallsignal S und drei Z-Signale Z ebenfalls für eine Last $F_N$ von 1500 N jedoch für eine Drehzahl von 80 U / min. In Fig. 6 sind zwei vollständige Umdrehungen U1, U2 dargestellt

Offensichtlich finden Mischreibungsereignisse a, b, c, d zwischen Welle 6 und dem Belag des Gleitlagers 1 statt. In Fig. 6 ist die Modulation im Signal erkennbar. An vier verschiedenen Stellen a, b, c, d, innerhalb einer Umdrehung ist es jeweils zu einem Anstreifen gekommen, d.h. es liegen Mischreibungsereignisse a, b, c, d vor.

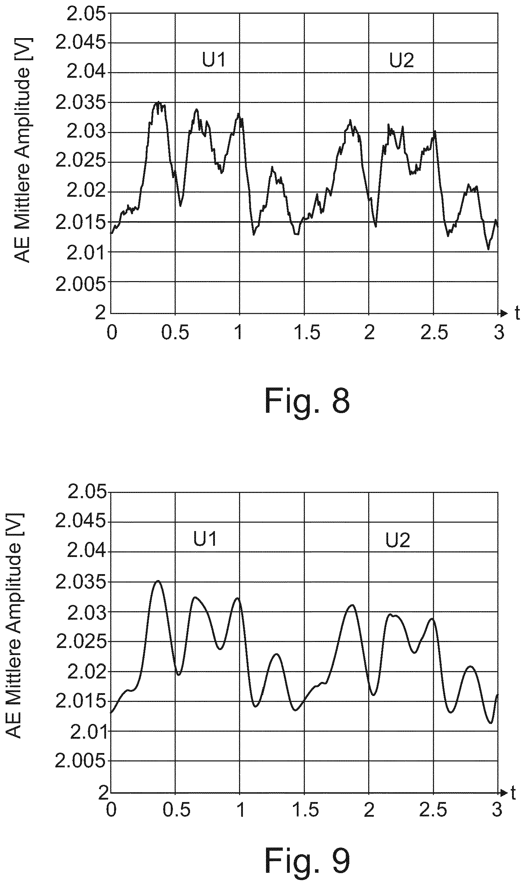

In Fig. 7 sind für eine Umdrehung U1 die Maxima und Minima im Körperschallsignal angegeben und Winkeln am Umfang des Gleitlagers 1 zugeordnet. Die Bestimmung der Maxima und Minima war oben schon erläutert worden und wird im Zusammenhang mit der Fig. 9 noch weiter erläutert.

Dieses Körperschallsignal S wird im Folgenden mit einer Ausführungsform des Verfahrens zur Überwachung bearbeitet, wie es z.B. im Zusammenhang mit Fig. 2 dargestellt ist. Dies bedeutet, dass das Signal mit einem Hochpassfilter gefiltert wird und die Einhüllende anschließend mittels einer Mittelung (Schritt 202) bestimmt wird.

Auf der x-Achse der Fig. 8 und 9 ist die Zeit aufgetragen.

In Fig. 8 ist die Energie (d.h. abhängig von RMS) der Einhüllenden des gefilterten Körperschallsignals S für zwei Umdrehungen U1, U2 dargestellt. Das Z-Signal Z liegt naturgemäß zwischen den beiden Umdrehungen U1, U2.

Da die Maxima numerisch bestimmt werden sollen, wird die Einhüllende des Körperschallsignals S mit dem Savitzky-Golay-Filter geglättet (Fig. 2, Schritt 203).

Das nun entstandene Signal ist in Fig. 9 zu sehen. Nun kann jedem Maximum (und Minimum) durch die Verwendung des Nullimpulssignals eine Winkelposition am Umfang des Gleitlagers 1 zugeordnet werden. Dies war bereits in Fig. 7 eingezeichnet worden.

Aus obigen Beschreibungen ist klar, dass damit ein Gleitlager 1 effizient auf Anstreifungen (d.h. Mischreibungsereignisse a, b, c, d) überwacht werden kann, indem in der Nähe des Gleitlagers 1 ein Körperschallsensor 3 angeordnet ist. Zusammen mit dem Impulsgeber und einem Rechner zur Auswertung der Daten, kann so z.B. ein Gleitlager 1 in einem Motor oder einem Flugzeugtriebwerk effizient überwacht werden.

Im Folgenden wird eine mögliche Anwendung für die Überwachung von Gleitlagern 1 in einem epizyklischen Planetengetriebe 20 dargestellt.

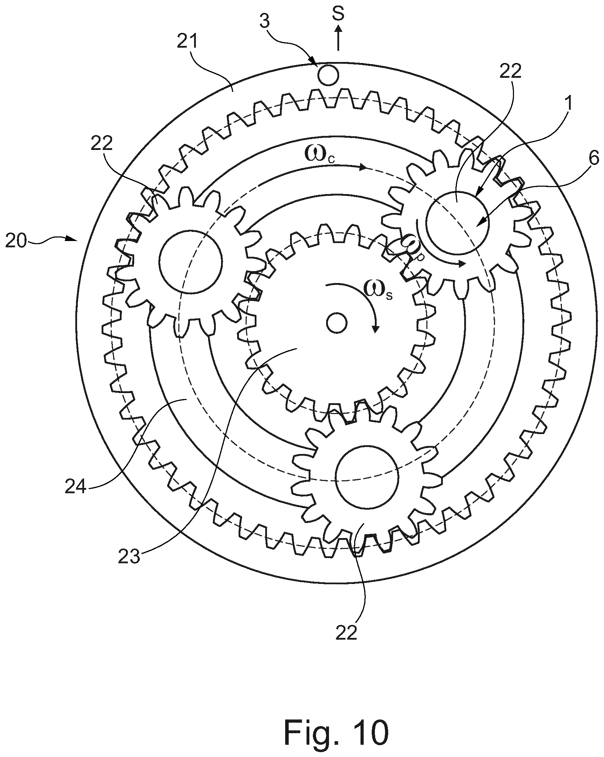

Fig. 10 zeigt in schematischer Weise in einer Frontalansicht ein epizyklisches Planetengetriebe 20 mit einem Hohlrad 21, drei Planetenrädern 22, einem Sonnenrad 23 und einem Carrier 24 (auch Planetenträger genannt). Ein solches Planetengetriebe 20 kann z.B. in einem Turbo-Fantriebwerk als Untersetzungsgetriebe eingebaut werden.

Der Antrieb des Planetengetriebes 20 kann über das Sonnenrad 23 erfolgen, das mit der Winkelgeschwindigkeit $\omega_S$ dreht. Die Planetenräder 22 rollen auf dem Sonnenrad 23 und in dem hier als feststehend angenommenen Hohlrad 21 ab. Die Wellen 6 der Planetenräder 22 sind auf dem Carrier 24 mittels Gleitlagern 1 gelagert, so dass sich die Planetenräder 22 mit einer Winkelgeschwindigkeit $\omega_P$ drehen. Der Carrier 24, über den in der dargestellten Ausführungsform der Abtrieb des Planetengetriebes 20 erfolgt, dreht sich um die Achse des Sonnenrades 23 mit der Winkelgeschwindigkeit $\omega_C$.

In der Ausführungsform gemäß Fig. 10 ist ein Körperschallsensor 3 in etwa mittig am oberen Rand am Hohlrad 21 eingebaut. Der Körperschall der Gleitlager 1 wird von diesem empfangen. Die Daten des Körperschallsignals S können vom Körperschallsensor 3 über eine Leitung oder auch drahtlos an einen hier nicht dargestellten Rechner 30 übertragen werden.

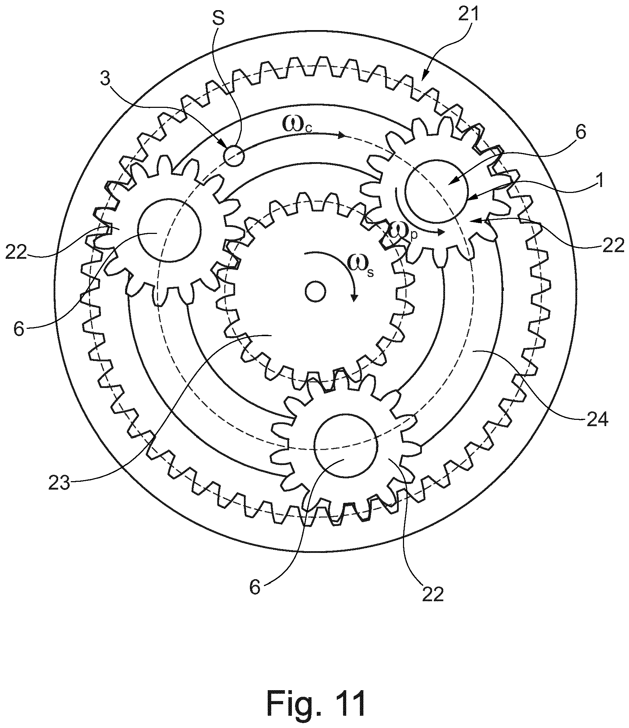

Alternativ kann der Körperschallsensor 3 auch am mitrotierenden Carrier 24 angeordnet sein, wie dies in Fig. 11 dargestellt ist. Hier ist aber eine drahtlose Datenübertragung der Körperschalldaten aus dem Gehäuse des Planetengetriebes 20 sinnvoll. Ansonsten ist die Funktion der Überwachung des Gleitlagers 1 wie in der Ausführungsform gemäß Fig. 10.

Die Darstellung des epizyklischen Planetengetriebes 20 ist hier nur beispielhaft zu verstehen. In anderen Ausführungsformen können z.B. fünf oder mehr Planetenräder verwendet werden. Auch ist es möglich, dass eine andere Kinematik gewählt wird, d.h. Antrieb und Abtrieb unterscheiden sich von dem Beispiel der Fig. 10 und 11. Insbesondere ist es möglich, dass für das hier beschriebene epizyklischen Planetengetriebes 20 andere Bauformen verwendet werden. Die Überwachung der Gleitlager 1 erfolgt in analoger Weise.

**Bezugszeichenliste**

| | |
|---|---|
| 1 | Gleitlager |
| 2 | Halterung Gleitlager |
| 3 | Körperschallsensor |
| 4 | Auflagebohrung für Krafteinleitung |
| 5 | Ölversorgungsleitung |
| 6 | Welle |
| 7 | erstes Stützlager |
| 8 | zweites Stützlager |
| 9 | Elektromotor |
| 10 | Gleitlagervorrichtung |
| | |
| 20 | Planetengetriebe |
| 21 | Hohlrad |
| 22 | Planetenräder |
| 23 | Sonnenrad |
| 24 | Carrier |
| | |
| 30 | Rechner |
| | |
| a, b, c, d | Anstreifstellen, Mischreibungsereignisse |
| | |
| $F_N$ | eingeleitete Kraft |
| S | Körperschallsignal |
| Z | Signal Impulsgeber |

**Patentansprüche**

1.  Verfahren zur Überwachung eines Gleitlagers (1) mit einer darin gelagerten, insbesondere darin drehenden Welle (6) auf mindestens ein Mischreibungsereignis (a, b, c, d), wobei mindestens ein zeitabhängiges Körperschallsignal (S) von mindestens einem Körperschallsensor (3), insbesondere genau einem Körperschallsensor (3) vom Gleitlager (1) aufgenommen wird, **gekennzeichnet durch**

a) eine Filterung (201) des Körperschallsignals (S),

b) eine anschließende Berechnung (202) einer Hüllkurve für das gefilterte Körperschallsignal (S),

c) eine anschließende Glättung (203) der Hüllkurve und

d) eine Kombination (205) der Daten für die geglättete Hüllkurve mit einem Drehwinkelsignal (Z), das von der Umdrehung der Welle (6) im Gleitlager (1) abhängig ist, wobei das Drehwinkelsignal (Z) durch eine Mustererkennung oder einen Referenzimpuls durch einen Inkrementalgeber, insbesondere einen magnetischen Referenzimpuls bestimmt und / oder erzeugt wird.

e) eine Berechnung mindestens eines Maximums, aus der geglätteten Hüllkurve, das mit dem mindestens einen Mischreibungsereignis (a, b, c, d) korreliert, aus den kombinierten Daten aus Schritt d) für die Bestimmung einer Winkelangabe für das mindestens eine Mischreibungsereignis (a, b, c, d) am Umfang des Gleitlagers (1).

2. Verfahren nach Anspruch 1, **dadurch gekennzeichnet, dass** das Drehwinkelsignal (Z) allein durch die Bewegung der Welle (6) und / oder des Gleitlagers (1), insbesondere durch mindestens ein Magnetelement der Welle (6) und / oder im Gleitlager (1) und einem entsprechend zugeordneten Magnetsensor, generiert wird.

3. Verfahren nach Anspruch 1 oder 2 , **dadurch gekennzeichnet, dass** das Drehwinkelsignal (Z) aktiv durch mindestens einen Impuls generiert wird, insbesondere einen Nullimpuls oder eine Vielzahl von Impulsen des Inkrementalgebers.

4. Verfahren nach mindestens einem der vorhergehenden Ansprüche, **dadurch gekennzeichnet, dass** die Filterung (201) einen Hochpassfilter aufweist, insbesondere mit einer cut-off Frequenz zwischen 50 und 300 kHz, insbesondere zwischen 80 und 150 kHz.

5. Verfahren nach mindestens einem der vorhergehenden Ansprüche, **dadurch gekennzeichnet, dass** die Berechnung (202) der Hüllkurve mittels einer Hilbert Transformation oder durch eine Mittelung über eine vorbestimmte Menge an gefilterten Körperschalldatenpunkten (S) erfolgt.

6. Verfahren nach mindestens einem der vorhergehenden Ansprüche, **dadurch gekennzeichnet, dass** die Hüllkurve durch einen Glättungsfilter, insbesondere einen Savitzky-Golay Filter geglättet (204) wird.

7. Verfahren nach mindestens einem der vorhergehenden Ansprüche, **dadurch gekennzeichnet, dass** ein Rechner (30) die zeitabhängigen Daten über die Winkelangabe, den Winkelort, die Intensität und / oder die Dauer des mindestens einen Mischreibungsereignisses (a, b, c, d) am Umfang des Gleitlagers (1) erfasst, speichert, insbesondere bei dem Eintreten einer vorbestimmten Bedingung ein Signal abgibt, insbesondere ein Warnsignal oder ein Reparatursignal.

8. Verfahren nach mindestens einem der vorhergehenden Ansprüche, **dadurch gekennzeichnet, dass** das Gleitlager in einem Planetengetriebe (20), insbesondere einem Planetengetriebe (20) in einer Windkraftanlage, einem Fahrzeug oder Flugzeugtriebwerk angeordnet ist.

9. Verfahren nach Anspruch 8, **dadurch gekennzeichnet, dass** kinematische Bewegungsdaten und / oder Körperschallereignisse des Planetengetriebes, insbesondere die Bewegungsdaten und / oder Körperschallereignisse der Bewegungen von Sonnenrad, Planetenhalter und / oder Planetenrädern herausgefiltert werden.

10. Vorrichtung zur Überwachung eines Gleitlagers (1) mit einer darin gelagert Welle (6), insbesondere einer darin drehenden Welle (6), auf mindestens ein Mischreibungsereignis (a, b, c, d), wobei ein Körperschallsignal (S) durch mindestens einen Körperschallsensors (3), insbesondere genau einem Körperschallsensor (3), vom Gleitlager (1) aufgenommen wird, **gekennzeichnet durch**

a) ein Mittel für mindestens eine Filterung (201) des Körperschallsignals (S),

b) ein Mittel für eine Berechnung (202) einer Hüllkurve für das gefilterte Körperschallsignal (S),

c) ein Mittel für eine Glättung (203) der Hüllkurve und

d) ein Mittel für eine Kombination (205) der Daten für die geglättete Hüllkurve mit einem Drehwinkelsignal (Z), das von der Umdrehung der Welle (6) im Gleitlager (1) abhängig ist und das Drehwinkelsignal (Z) durch eine Mustererkennung oder einen Referenzimpuls durch einen Inkrementalgeber, insbesondere einen magnetischen Referenzimpuls bestimmbar und / oder erzeugbar ist,

e) und ein Mittel zur Berechnung mindestens eines Maximums, aus der geglätteten Hüllkurve, das mit dem mindestens einen Mischreibungsereignis (a, b, c, d) korreliert, aus den kombinierten Daten für die Bestimmung einer Winkelangabe für das mindestens eine Mischreibungsereignis (a, b, c, d) am Umfang des Gleitlagers (1).

11. Vorrichtung zur Überwachung nach Anspruch 10, **dadurch gekennzeichnet, dass** der mindestens eine Körperschallsensor (3) an der Stirnseite einer Halterung (2) des Gleitlagers (1) angeordnet ist.

12. Vorrichtung zur Überwachung nach mindestens einem der Ansprüche 10 oder 11, **dadurch gekennzeichnet, dass** der mindestens eine Körperschallsensor (3) ein Piezoelement zur Aufnahme des Körperschalls aufweist.

13. Vorrichtung zur Überwachung nach mindestens einem der Ansprüche 10 bis 12, **dadurch gekennzeichnet, dass** der mindestens eine Körperschallsensor (3) in unmittelbarer Nähe des Umfangs des Gleitlagers (1) angeordnet ist, insbesondere in unmittelbarer Nähe einer Krafteinleitung ($F_N$) angeordnet ist.

**Claims**

1. Method for monitoring a sliding bearing (1) having a shaft (6) mounted therein, in particular a shaft (6) rotating therein, for at least one mixed friction event (a, b, c, d), wherein at least one time-dependent structure-borne sound signal (S) is picked up from the sliding bearing (1) by at least one structure-borne sound sensor (3), in particular precisely one structure-borne sound sensor (3),
   **characterized by**

   a) filtering (201) of the structure-borne sound signal (S),
   b) subsequent calculation (202) of an envelope curve for the filtered structure-borne sound signal (S),
   c) subsequent smoothing (203) of the envelope curve, and
   d) combination (205) of the data for the smoothed envelope curve with a rotational angle signal (Z) dependent on the revolution of the shaft (6) in the sliding bearing (1), wherein the rotational angle signal (Z) is determined and/or generated by pattern recognition or a reference pulse, in particular a magnetic reference pulse, by means of an incremental encoder,
   e) calculation of at least one maximum from the smoothed envelope curve, which is correlated with the at least one mixed friction event (a, b, c, d), from the combined data from step d) for determining an angle specification for the at least one mixed friction event (a, b, c, d) at the circumference of the sliding bearing (1).

2. Method according to Claim 1, **characterized in that** the rotational angle signal (Z) is generated solely by the movement of the shaft (6) and/or of the sliding bearing (1), in particular by at least one magnetic element of the shaft (6) and/or in the sliding bearing (1) and an accordingly assigned magnetic sensor.

3. Method according to Claim 1 or 2, **characterized in that** the rotational angle signal (Z) is actively generated by means of at least one pulse, in particular a zero pulse or a multiplicity of pulses from the incremental encoder.

4. Method according to at least one of the preceding claims, **characterized in that** the filtering (201) has a high-pass filter, in particular with a cut-off frequency of between 50 and 300 kHz, in particular between 80 and 150 kHz.

5. Method according to at least one of the preceding claims, **characterized in that** the calculation (202) of the envelope curve is performed by means of a Hilbert transformation or by means of averaging over a predetermined quantity of filtered structure-borne sound data points (S) .

6. Method according to at least one of the preceding claims, **characterized in that** the envelope curve is smoothed (204) by a smoothing filter, in particular a Savitzky-Golay filter.

7. Method according to at least one of the preceding claims, **characterized in that** a computer (30) captures the time-dependent data relating to the angle specification, the angle location, the intensity and/or the duration of the at least one mixed friction event (a, b, c, d) at the circumference of the sliding bearing (1), stores said data, and emits a signal, in particular a warning signal or a repair signal, in particular if a predetermined condition occurs.

8. Method according to at least one of the preceding claims, **characterized in that** the sliding bearing is arranged in a planetary transmission (20), in particular a planetary transmission (20) in a wind power plant, a vehicle or an aircraft engine.

9. Method according to Claim 8, **characterized in that** kinematic movement data and/or structure-borne sound events of the planetary transmission, in particular the movement data and/or structure-borne sound events of the movements of the sun gear, the planet holder and/or the planetary gears, are filtered out.

**10.** Apparatus for monitoring a sliding bearing (1) having a shaft (6) mounted therein, in particular a shaft (6) rotating therein, for at least one mixed friction event (a, b, c, d), wherein a structure-borne sound signal (S) is picked up from the sliding bearing (1) by at least one structure-borne sound sensor (3), in particular precisely one structure-borne sound sensor (3),

**characterized by**

a) a means for at least filtering (201) the structure-borne sound signal (S),
b) a means for a calculation (202) of an envelope curve for the filtered structure-borne sound signal (S),
c) a means for a smoothing (203) of the envelope curve, and
d) a means for a combination (205) of the data for the smoothed envelope curve with a rotational angle signal (Z) dependent on the revolution of the shaft (6) in the sliding bearing (1), and the rotational angle signal (Z) can be determined and/or generated by pattern recognition or a reference pulse, in particular a magnetic reference pulse, by means of an incremental encoder,
e) and a means for calculating at least one maximum from the smoothed envelope curve, which is correlated with the at least one mixed friction event (a, b, c, d), from the combined data for determining an angle specification for the at least one mixed friction event (a, b, c, d) at the circumference of the sliding bearing (1).

**11.** Monitoring apparatus according to Claim 10, **characterized in that** the at least one structure-borne sound sensor (3) is arranged on the end face of a holder (2) of the sliding bearing (1).

**12.** Monitoring apparatus according to at least either of Claims 10 and 11, **characterized in that** the at least one structure-borne sound sensor (3) has a piezoelectric element for picking up the structure-borne sound.

**13.** Monitoring apparatus according to at least one of Claims 10 to 12, **characterized in that** the at least one structure-borne sound sensor (3) is arranged in the immediate vicinity of the circumference of the sliding bearing (1), in particular is arranged in the immediate vicinity of an application of force ($F_N$).

**Revendications**

**1.** Procédé de surveillance d'un palier lisse (1) comportant un arbre (6) monté dans celui-ci, en particulier tournant dans celui-ci, pour au moins un événement de friction mixte (a, b, c, d), dans lequel au moins un signal de bruit de structure (S) dépendant du temps est acquis par au moins un capteur de bruit de structure (3), en particulier par exactement un capteur de bruit de structure (3) du palier lisse (1), **caractérisé par**

a) un filtrage (201) du signal de bruit de structure (S),
b) un calcul effectué ensuite (202) d'une courbe d'enveloppe du signal de bruit de structure (S) filtré,
c) un lissage effectué ensuite (203) de la courbe d'enveloppe ; et
d) une combinaison (205) des données de la courbe d'enveloppe lissée avec un signal d'angle de rotation (Z) qui dépend de la rotation de l'arbre (6) dans le palier lisse (1), dans lequel le signal d'angle de rotation (Z) est déterminé et/ou généré par une reconnaissance de forme ou une par impulsion de référence par un codeur incrémental, en particulier une impulsion de référence magnétique,
e) un calcul d'au moins un maximum, à partir de la courbe d'enveloppe lissée, qui est corrélé avec ledit au moins un événement de friction mixte (a, b, c, d), à partir des données combinées de l'étape d) pour déterminer une indication d'angle pour ledit au moins un événement de friction mixte (a, b, c, d) à la périphérie du palier lisse (1).

**2.** Procédé selon la revendication 1, **caractérisé en ce que** le signal d'angle de rotation (Z) est généré uniquement par le mouvement de l'arbre (6) et/ou du palier lisse (1), en particulier par au moins un élément magnétique de l'arbre (6) et/ou dans le palier lisse (1) et un capteur magnétique associé de manière correspondante.

**3.** Procédé selon la revendication 1 ou 2, **caractérisé en ce que** le signal d'angle de rotation (Z) est généré activement par au moins une impulsion, en particulier une impulsion nulle ou une pluralité d'impulsions du codeur incrémental.

**4.** Procédé selon au moins l'une des revendications précédentes, **caractérisé en ce que** le filtrage (201) comprend un filtre passe-haut, présentant notamment une fréquence de coupure comprise entre 50 et 300 kHz, en particulier entre 80 et 150 kHz.

**5.** Procédé selon au moins l'une des revendications précédentes, **caractérisé en ce que** le calcul (202) de la courbe d'enveloppe est effectué au moyen d'une transformation de Hilbert ou en calculant la moyenne sur un ensemble prédéterminé de points de données de bruit de structure (S) filtrés.

**6.** Procédé selon au moins l'une des revendications précédentes, **caractérisé en ce que** la courbe d'enveloppe est lissée (204) par un filtre de lissage, en particulier un filtre Savitzky-Golay.

**7.** Procédé selon au moins l'une des revendications précédentes, **caractérisé en ce qu'**un ordinateur (30) détecte et stocke des données dépendant du temps concernant l'indication d'angle, la position angulaire, l'intensité et/ou la durée dudit au moins un événement de friction mixte (a, b, c, d) à la périphérie du palier lisse (1), et délivre un signal, en particulier un signal d'avertissement ou un signal de réparation, notamment lorsqu'une condition prédéterminée se présente.

**8.** Procédé selon au moins l'une des revendications précédentes, **caractérisé en ce que** le palier lisse est disposé dans un engrenage planétaire (20), en particulier un engrenage planétaire (20) dans une installation éolienne, un moteur de véhicule ou d'avion.

**9.** Procédé selon la revendication 8, **caractérisé en ce que** des données de mouvement cinématique et/ou des événements de bruit de structure de l'engrenage planétaire, en particulier les données de mouvement et/ou les événements de bruit de structure des mouvements de la roue solaire, du porte-satellites et/ou des roues satellites sont filtrés.

**10.** Dispositif de surveillance d'un palier lisse (1) comportant un arbre (6) monté dans celui-ci, en particulier un arbre (6) tournant dans celui-ci, pour au moins un événement de friction mixte (a, b, c, d), dans lequel un signal de bruit de structure (S) est acquis par au moins un capteur de bruit de structure (3), en particulier par exactement un capteur de bruit de structure (3) du palier lisse (1), **caractérisé par**

a) un moyen destiné à effectuer au moins un filtrage (201) du signal de bruit de structure (S),
b) un moyen de calcul (202) d'une courbe d'enveloppe du signal de bruit de structure (S) filtré,
c) un moyen destiné à effectuer un lissage (203) de la courbe d'enveloppe et
d) un moyen destiné à effectuer une combinaison (205) des données de la courbe d'enveloppe lissée avec un signal d'angle de rotation (Z) qui dépend de la rotation de l'arbre (6) dans le palier lisse (1) et le signal d'angle de rotation (Z) peut être déterminé et/ou généré par une reconnaissance de forme ou par une impulsion de référence par un codeur incrémental, en particulier une impulsion de référence magnétique,
e) et un moyen destiné à calculer au moins un maximum, à partir de la courbe d'enveloppe lissée, qui est corrélé avec ledit au moins un événement de friction mixte (a, b, c, d), à partir des données combinées pour déterminer une indication d'angle pour ledit au moins un événement de friction mixte (a, b, c, d) à la périphérie du palier lisse (1).

**11.** Dispositif de surveillance selon la revendication 10, **caractérisé en ce que** ledit au moins un capteur de bruit de structure (3) est disposé sur la face avant d'un support (2) du palier lisse (1).

**12.** Dispositif de surveillance selon au moins l'une des revendications 10 ou 11, **caractérisé en ce que** ledit au moins un capteur de bruit de structure (3) comporte un élément piézoélectrique destiné à détecter le bruit de structure.

**13.** Dispositif de surveillance selon au moins l'une des revendications 10 à 12, **caractérisé en ce que** ledit au moins un capteur de bruit de structure (3) est disposé à proximité immédiate de la périphérie du palier lisse (1), en particulier à proximité immédiate d'une initiation de force ($F_N$).

Fig. 1

Fig. 2

EP 3 447 469 B1

Fig. 3A        Fig. 3B        Fig. 3C

Fig. 4

Körperschallsignal
Z / Signal

Zeit

Fig. 5

13

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030106375 A1
- US 6298725 B1
- WO 2013156068 A1
- EP 0209862 A2

**In der Beschreibung aufgeführte Nicht-Patentliteratur**

- **J. DECKERS.** Entwicklung einer Low-Cost Körperschallsensorik zur Überwachung des Verschleißverhaltens von wälz- oder gleitgelagerten Kreiselpumpen kleiner Leistung. *Dissertation, Gerhard Mercator-Universität Duisburg,* 2001
- Schadensfrüherkennung an geschmierten Gleitkontakten mittels Schallemissionsanalyse. **M. FRITZ ; A. BURGER ; A. ALBERS.** Institut für Maschinenkonstruktionslehre und Kraftfahrzeugbau, Bericht. Universität Karlsruhe, 2001
- An Investigation of Surface Vibration, Airborne Sound and Acoustic Emission Characteristics of a Journal Bearing for Early Fault Detection and Diagnosis. **P. RAHARJO.** Dissertation. University of Huddersfield, Mai 2013
- **M. LEAHY ; D. MBA ; P. COOPER ; A. MONTGOMERY ; D. OWEN.** Experimental investigation into the capabilities of acoustic emission for the detection of shaft-to-seal rubbing in !arge power generation turbines. *Proceedings of the Institution of Mechanical Engineers, Part J: Journal of Engineering Tribology,* 2006, vol. 220 (7), 607-615
- **A. ALBERS ; M. DICKERHOF.** Simultaneous Monitoring of Rolling-Element and Journal Bearings Using Analysis of Structure-Born Ultrasound Acoustic Emissions. *International Mechanical Engineering Congress & Exposition,* 2010
- **D. GUICKING.** Schwingungen: Theorie und Anwendung in Mechanik, Akustik, Elektrik und Optik, Göttingen. Springer Vieweg: Springer Fachmedien Wiesbaden, 2016
- **A. SAVITZKY ; M. J. E. GOLAY.** Smoothing and Differentiation of Data by Simplified Least Squares Procedures. *Anal. Chem.,* Juli 1964